# EUROPEAN PATENT SPECIFICATION

(11) **EP 1 685 556 B1**
(45) Date of publication and mention of the grant of the patent: **23.05.2007**
(21) Application number: 04799092.4
(22) Date of filing: 09.11.2004
(51) Int. Cl.: G10L 15/26

(54) **AUDIO DIALOGUE SYSTEM AND VOICE BROWSING METHOD**
AUDIO-DIALOGSYSTEM UND SPRACHGESTEUERTES BROWSING-VERFAHREN
SYSTEME DE DIALOGUE AUDIO ET PROCEDE D'EXPLORATION VOCALE

(30) Priority: 10.11.2003 EP 03104129
(43) Date of publication of application: 02.08.2006
(73) Proprietor: Philips Intellectual Property & Standards GmbH, 20099 Hamburg (DE); Koninklijke Philips Electronics N.V., 5621 BA Eindhoven (NL)
(72) Inventor: SCHOLL,H.R., Philips Intellectual Ppty&Stand. GmbH, 52066 Aachen (DE)
(74) Representative: Volmer, Georg
(86) International application number: PCT/IB2004/052351
(87) International publication number: WO 2005/045806

(56) References cited:
- EP-A- 1 168 300
- LARSON J A: "VoiceXML 2.0 and the W3C speech interface framework" PROCEEDINGS OF IEEE WORKSHOP ON AUTOMATIC SPEECH RECOGNITION AND UNDERSTANDING, 9-13 DEC. 2001, MADONNA DI CAMPIGLIO, ITALY, 9 December 2001 (2001-12-09), pages 5-8, XP010603665 2001 IEEE WORKSHOP ON AUTOMATIC SPEECH RECOGNITION AND UNDERSTANDING, CONFERENCE PROCEEDINGS, PISCATAWAY, NJ, USA
- ROLLINS S ET AL: "AVoN calling: AXL for voice-enabled Web navigation" COMPUTER NETWORKS, ELSEVIER SCIENCE PUBLISHERS B.V., AMSTERDAM, NL, vol. 33, no. 1-6, June 2000 (2000-06), pages 533-551, XP004304790 ISSN: 1389-1286

## Description

The invention relates to an audio dialogue system and a voice browsing method.

Audio dialogue systems allow for a human user to conduct an audio dialogue with an automatic device, generally a computer. The device relates information to the user by using natural speech. Corresponding voice synthesis means are generally known and widely used. On the other hand, the device accepts user input in form of natural speech, using available speech recognition techniques.

Examples of audio dialogue systems include, for example, telephone information systems, like e.g. an automatic railway timetable information system.

The content of the dialogue between the device and the user will be stored in the device, or in a remote location accessible from the device. The content may be stored in a hypertext format, where the content data is available as one or more documents. The documents comprises the actual text content, which may be formatted by format descriptors, called tags. A special sort of tag is a reference tag, or link. A reference designates a reference aim, which may be another part of the present content document, or a different hypertext document. Each reference also comprising activation information, which allows a user to select the reference, or link, by its activation information. A standard hypertext document format is the XML format.

Audio dialogue systems are available, which allow users to access hypertext documents over an audio only channel. Since reading of hypertext documents is generally referred to as "browsing", these systems are also called "voice browsers". US-A-5,884,266 describes such an audio dialogue system which outputs the content data of a hypertext document as speech to a user.

If the documents contains references, the corresponding activation information, here given as an activation phrase termed "link identifier" is read to the user as speech, while distinguishing the link identifier using distinct sound characteristics. This may comprise aurally rendering the link identifier text with a particular voice pitch, volume or other sound or audio characteristics which are readily recognisable by a user as distinct from the surrounding text. To activate a link, a user may give voice commands corresponding to the link identifier or activation phrase. The users voice command is converted in a speech recognition system and processed in a command processor. If the voice input is identical to the link identifier, or activation phrase, the voice command is executed using the link address (reference aim) and continues reading text information to the user from the specified address.

An example of a special format for hypertext documents aimed at audio only systems is VoiceXML. In the present W3C candidates recommendation of "Voice Extensible Markup Language (VoiceXML) Version 2.0", the activation phrases associated with a link may be given as an internal or external grammar. In this way, a plurality of valid activation phrases may be specified. The users speech input has to exactly match one of these activation phrases for a link to be activated.

If the user's input does not exactly match one of the activation phrases, the user will usually receive an error message stating that the input was not recognized. To avoid this, the user must exactly memorize the activation phrases presented to him, or the author of the content document must anticipate possible user voice commands that would be acceptable as activation phrase for a certain link.

A further example of a known voice browser is disclosed in EP-A-1168300.

It is the object of the present invention to provide an audio dialogue system and a voice browsing method which allow for easy, intuitive activation of a reference by the user.

This object is solved according to the invention by an audio dialogue system according to claim 1 and a voice browsing method according to claim 8. Dependent claims refer to preferred embodiments.

A system according to the invention comprises an audio input unit with speech recognition means and an audio output unit with speech synthesis means. The system further comprises browsing means. It should be noted, that these terms refer to functional entities only, and that in a specific system the mentioned means need not be present as physically separate assemblies. It is especially preferred that at least the browsing means are implemented as software executed by a computer. Speech recognition and speech synthesis means are readily available for the skilled person, and may be implemented as separate entities or, alternatively, as software running on the same computer as the software implementing the browsing means.

According to the invention, an audio input signal (user voice command) is converted from speech into text input data and is compared to the activation phrases in the currently processed document. As previously known, in case of an exact match, i.e. input text data identical to a given activation phrase, the reference, or link is activated by accessing content data corresponding to the reference aim.

In contrast to previously known dialogue systems and voice browsing methods, a match may also be found if the text input data is not identical to an activation phrase, but has similar meaning.

Thus, in a dialogue system or a voice browsing method according to the invention the user is no longer forced to exactly memorize the activation phrase. This is especially advantageous in a document with a large number of links. The user may want to make his choice after hearing all the available options. He may then no longer recall the exact activation phrase of the, say, first or second link in the document. But since the activation phrase will generally describe the linked document in short, the user is likely to still memorize the meaning of the activation phrase. The user may then activate the link by giving a command in his own words, which will be recognized and correctly associated with the corresponding link.

According to a development of the invention, the system uses dictionary means to determine if input text data has a similar meaning as an activation phrase. For a plurality of search words, connected words can be retrieved from the dictionary means. The connected words have a meaning connected to that of the search word. It is especially preferred, that connected words have the same meaning (synonyms), a superordinate or subordinate meaning (hypernyms, hyponyms), or stand in a whole/part relationship to the search word (holonyms, meronyms).

For finding a matching meaning, connected words are retrieved for words comprised in either the input text data, the activation phrase, or both. Then the connected word will be used in the comparison of activation phrase and text input. In this way, a match will be found if the user in his activation command uses an alternative, but in meaning connected term as compared to the exact activation phrase.

According to another embodiment of the invention, the browsing means determine a similarity in meaning between input command and activation phrase by using the latent semantic analysis (LSA) method, or a method similar to it. LSA is a method of using statistical information extracted from a plurality of documents to give a measure of similarity in meaning for word/word, word/phrase and phrase/phrase pairs. This mathematically derived measure of similarity has been found to well approximate human understanding of words and phrases. In the present context, LSA can advantageously be employed to determine if an activation phrase and a voice command input by the user (text input data) have a similar meaning.

According to another embodiment of the invention, the browsing means determine a similarity in meaning between input command and activation phrase by information retrieval methods which rely on comparing the two phrases to find common words, and by weighting these common occurrences by the inverse document frequency of the common word. The inverse document frequency for a word may be calculated by determining the number of occurrences of that word in the specific activation phrase, and divide this value by the sum of occurrences of that word in all activation phrases for all links in the current document.

According to yet another embodiment of the invention, the browsing means determine a similarity in meaning between input command and activation phrase by using soft concepts. This method focuses on word sequences. Sequences of words occurring in the activation phrases are processed. A match of the input text data is found by processing these word sequences.

In a preferred embodiment, language models are trained for each link, giving the word sequence frequencies of the corresponding activation phrases. Advantageously, the models may be smoothed using well known techniques to achieve good generalization. Also, a background model may be trained. When trying to find a match, the agreement of the text input data with these models is determined.

In the following, embodiments of the invention will be described with reference to the figures, where
Fig.1 shows a symbolic representation of a first embodiment of an audio dialogue system;
Fig. 2 shows a symbolic representation of a hyperlink in a system of fig. 1;
Fig. 3 shows a symbolic representation of a matching and dictionary means in the system according to fig. 1;
Fig. 4 shows a part of a second embodiment of an audio dialogue system.

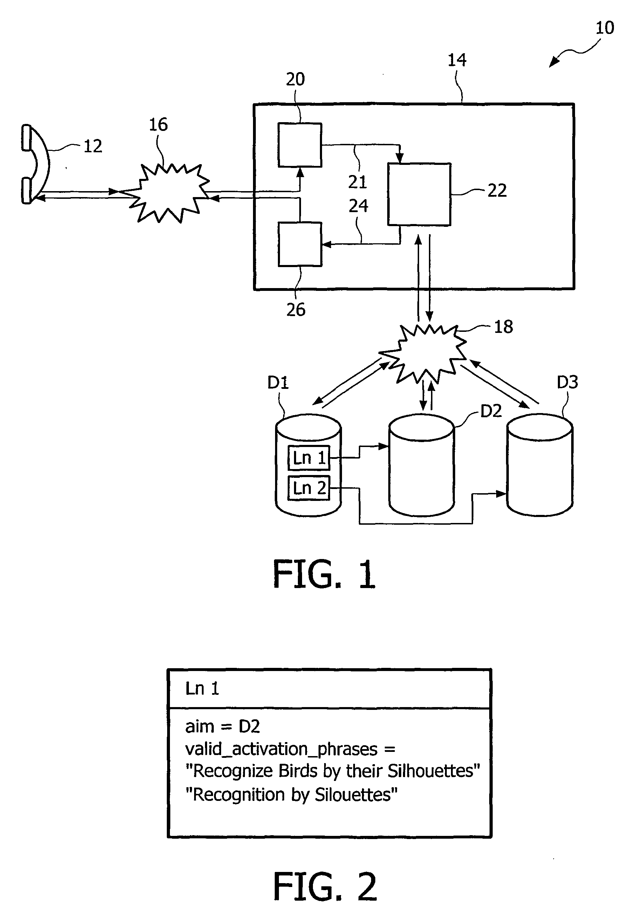

In figure 1, an audio dialogue system 10 is shown. The system 10 comprises an audio interface 12, a voice browser 14 and a number of documents D1, D2, D3.

In the exemplary embodiment of figure 1, the audio interface 12 is a telephone, which is connected over telephone network 16 to voice browser 14. In turn, voice browser 14 can access documents D1, D2, D3 over a data network 18, e.g. a local area network (LAN) or the internet.

Voice browser 14 comprises a speech recognition unit 20 connected to the audio interface 12, which converts audio input into recognized text data 21. The text data 21 is delivered to a central browsing unit 22. The central browsing unit 22 delivers output text data 24 to a speech synthesis unit 26, which converts the output text data 24 to an output speech audio signal, which is output to a user via telephone network 16 and audio interface 12.

In figure 1, the dialogue system 10 and especially the voice browser 14 are only shown schematically with their functional units. In an actual implementation, voice browser 14 would be a computer with a processing unit, e.g. a microprocessor, and program memory for storing a computer program which, when executed by the processing unit, implements the function of voice browser 14 as described below. Both speech synthesis and speech recognition may also be implemented in software. These are well known techniques, and will therefore not be further described here.

Hypertext documents D1, D2, D3 are assessible over network 18 using a network address. In the example of figure 1, for reasons of simplicity the network address will be assumed to be identical to the reference numeral. Techniques for making a document available in a data network, like the internet, like for example the HTTP protocol, are well known to the skilled person and will also not be further described.

Hypertext documents D1, D2, D3 are text documents which are formatted in XML format. In the following, a simplified example of a source code for document D1 is given:

```
                 <document = D1>
                 <title>
                       Birds
                 </title>
                 <p>
                       Birds
                 </p>
                 <p>
                       We have a number or articles available on birds:
                 </p>
                <link Ln1
                       address=D2,
                       valid_activation_phrases=
                              " Recognize Birds by their Silhouettes"
                              " Recognition by Silhouettes"
                       Recognize Birds by their Silhouettes
                </link>
                <link Ln2
                       address=D3,
                       valid_activation_phrases=
                              "Songs and Calls of Birds"
                              Songs and Calls of Birds
                 </link>
                ...
```

Document D1 contains text content, describing available information on birds. The source code of document D1 contains two links Ln1, Ln2.

The first link Ln1, as given in the above source text for document D1, is represented in figure 2. The link contains the reference aim, here D2. The link also contains a number of valid activation phrases. These are the phrases that a user may speak to activate link Ln1.

In operation of the system 10 according to figure 1, voice browser 14 accesses document D1 and reads its content to a user via audio interface 12. Central units 22 extracts the content text and sends it as text data 24 to voice synthesis unit 26, which converts the text data 24 to an audio signal transmitted to the user via telephone network 16 and played by telephone 12.

When reading the text content of document D1, links Ln1, Ln2 are encountered. The central unit 22 recognises the link tags and processes links Ln1, Ln2 accordingly. The link phrase (e.g. for link Ln1: "recognize birds by their silhouettes") is read to the user in a way such that it is recognisable for the user that this phrase may be used to activate a link. To achieve this, either a distinct sound is added to the link phrase, or the voice speaking the text is alternated, e.g. artificially distorted, or the phrase is read in a particular manner (pitch, volume etc.).

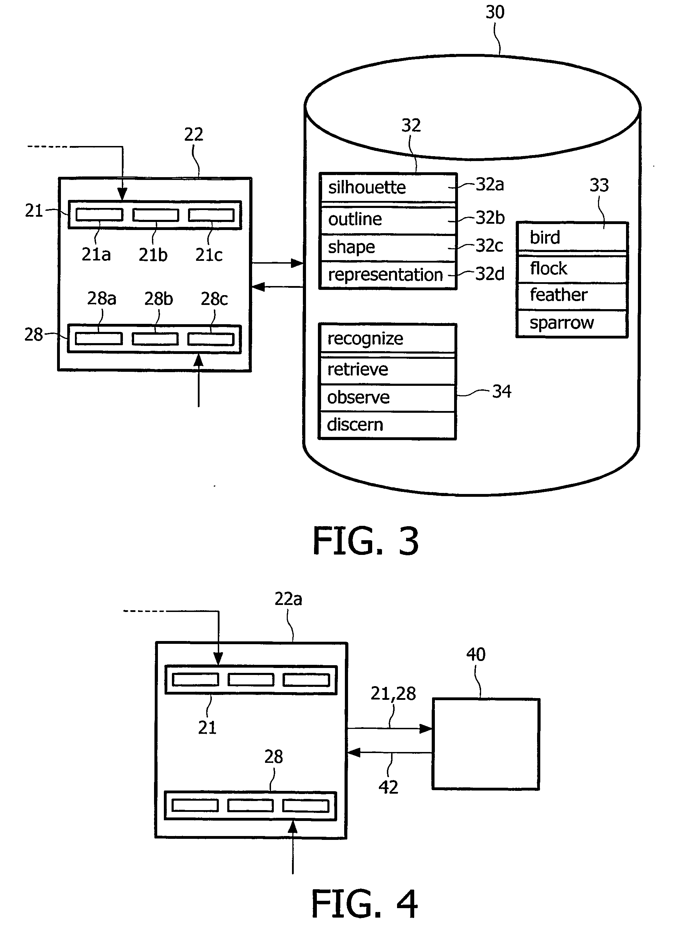

At any time during reading of the documents, the user can input voice commands over audio interface 12, which are received at the central unit 22 as text input 21. These words commands may be used to activate one of the links in the present document. To recognize if a specific voice command is meant to activate a link, the voice command is compared to the valid link activation phrases given for the links of the current document. This is shown in figure 3. Here, a voice command 21 consists of three words 21a, 21b, 21c. In a first step, these three words are compared to all valid activation phrases in the current document. In figure 3 an activation phrase 28 comprised of three words 28a, 28b, 28c is compared to voice command 21. In case of an exact match, e.g. if words 21a, 21b, 21c are identical to words 28a, 28b, 28c in the given order, the correspondingly designated link is activated.

Upon activation of a link, the central unit 22 stops processing of present document D1 and continuous processing of the document designated as reference aim, in this case document D2. The new document D2 is then processed in the same way as D1 before.

However, central unit 22 does not require exact, identical matching of voice command 21 and link activation phrase 28. Instead, a voice command is recognized as designating a specific link if the voice command 21 and one of the activation phrases 28 of the link have a similar meaning.

To automatically judge if the two phrases have a similar meaning, a dictionary data base 30 is used in the first embodiment. Database 30 contains a large number of data base entries 32, 33, 34 out of which only three examples are shown in fig. 3. In each database entry, for a search term 32a, a number of connected term 32b, 32c, 32d are given.

While in a simple embodiment database 30 may be a thesaurus, where for each search term only synonyms (terms that have the same meaning) can be retrieved, it is preferred to employ a database with a broadened scope, which besides synonyms also returns superordinate terms, that are more generic than the search term (hypernyms), subordinate terms, which are more specific than the search term (hyponyms), part names that name part of the larger whole designated by the search term (meronyms), and whole names which name the whole of which the search word is a part (holonyms). A corresponding electronic electrical database, which is also accessible over the internet, is the "WordNet" available form Princeton University, described in the book "WordNet, An Electronic Lexical Database" by Christiane Fellbaum (Editor), Bradford Books, 1998,

In case that no identical match for phrases 21, 28 has been found, the central unit 22 accesses data base 30 to retrieve connected terms for each of the words 28a, 28b, 28c of activation phrase 28.

Consider, for example, activation phrase 28 for link Ln1 to be "recognition by silhouettes". Further, consider the user command 21 to be "recognition by shape" which in the present context obviously has the same meaning. However, phrases 21 and 28 are not identical and in a first step would thereby not be found to match.

To check the phrases for identical meanings, central unit 22 accesses database 30. For the search term "silhouette" 32a, database 30 returns connected words "outline" 32b, "shape" 32c and "representation" 32d. Using this information, central unit 22 expands the valid activation phrase 28 to the corresponding alternatives "recognition by outline", "recognition by shape", etc.

When comparing the thus expanded activation phrase "Recognition by shape" to the user command 21, the central unit will find these to be identical, and therefore find a match between the user input and the first link Ln1. The central unit will thus activate this link Ln1, and corresponding by continue processing at the given reference aim address (D2).

Figure 4 shows a central unit 22a of a second embodiment of the invention. In the second embodiment of the invention, the structure of an audio dialogue system is the same as in figure 1. The difference between the first and second embodiments is that in the second embodiment the determination if phrases 21 and 28 have the same meaning is done in a different way.

In the second embodiment according to figure 4, phrases 21 and 28 are compared by obtaining a coherence score from an LSA unit 40.

LSA unit 40 compares phrases 21, 28 by using latent semantic analysis (LSA). LSA is a mathematical, fully automatic technique which can be used to measure the similarity of two texts. These texts can be individual words, sentences or paragraphs. Using LSA, a numerical value can be determined representative of the degree to which the two are semantically related.

There are numerous sources available describing the LSA method in detail. An overview can be found under http://lsa.colorado.edu/whatis.html. For further details, refer to the papers listed under http://lsa.colorado.edu/papers.html. A good comprehensive explanation of the method is given in Quesada, J. F. "Latent Problem Solving Analysis (LPSA): A computational theory of representation in complex, dynamic problem solving tasks", Dissertation, University of Granada (2003), especially Chapter 2.

Here again, it should be noted that LSA unit 40 is shown only to illustrate the way in which the LSA method is integrated in a voice browser. In an actual implementation, the complete function of the voice browser, including central unit 22a for comparing phrases 21 and 28, and a realization of this comparison by LSA would preferably be implemented as a single piece of software.

LSA is an information retrieval method which make use of vector space modeling. It is based on modeling the semantic space of a domain as a high dimensional vector space. The dimensional variables of this vector space are words (or word families, respectively).

In the present context of activation phrases, the available documents used as training space are the activation phrases for the different links in the currently processed hypertext document D1. Out of this training space, a co-occurrence matrix A of dimension N x k is extracted: For each of N possible words the number of occurrences of these words in the k documents comprised in the training space is given in the corresponding matrix value. To avoid influence by words occurring in a large number of contexts, the co-occurrence matrix may be filtered using special filtering functions.

This (possibly filtered) matrix A is subjected to a singular value decomposition (SVD), which is a form of factor analysis decomposing the matrix into the product of three matrices U D V^{T}, where D is a diagonal matrix of Dimension KxK with the singular values on the diagonal and all other values zero. U is a square orthogonal NxN matrix and comprises the eigenvectors of A. This decomposition gives a projected, semantic space described by these eigenvectors.

A dimensional reduction of the semantic space can advantageously be introduced by selecting only a limited number of singular values, i.e. the largest singular values and only using the corresponding eigenvectors. This dimensional reduction can be viewed as eliminating noise.

The semantic meaning of a phrase may then be interpreted as the direction of the corresponding vector in the semantic space achieved. A semantic relation between two phrases can be quantified by calculating a scalar product of the corresponding vectors. E.g. the Euklidian product of two vectors (of unit length) depends on the cosine of the angle between the vectors, which is equal to One for parallel vectors and equal to Zero for perpendicular vectors.

This numerical value can be used here to quantify the degree up to which a user's text input data 21 and a valid activation phrase 28 have the same meaning.

The LSA unit determines this value for all activation phrases. If all of the values are below a certain threshold, none of the links is activated and an error message is issued to the user. Otherwise, the activation phrase with the maximum value is "recognized", and the corresponding link activated.

The above described LSA method may be implemented differently. The method is more effective if a larger training space is available. In the present context, the training space is given by the valid activation phrases. In cases where the author of a document has not spent a lot of time determining possible user's utterances for a special link, the number of activation phrases is small. However, the training space may be expanded by also considering the documents that the links point to, since the activation phrase will generally be related to the contents of the document that corresponds to the reference aim.

Further, the co-occurrence matrix may comprise not only the N words actually occuring in the activation phrases, but may comprise a much larger number of words, e.g. the complete vocabulary of the voice recognition means.

In further embodiments of audio dialogue systems, other methods may be employed to determine the similarity in meaning between input text data 21 and activation phrase 28. For example, known information retrieval methods may be used, where a score is determined as quotient out of the word frequency (number of occurrences of a term in a specific phrase) and the overall word frequency (overall occurences of that term in all phrases). Phrases are compared by awarding, for each common term, the score of this specific term. Since the score will be low for terms of general meaning (which are present in a large number of phrases) and will be high for terms of specific meaning distinguishing different links from each other, the overall sum of scores for each pair of phrases will indicate a degree to which these phrases agree.

In a still further embodiment, so-called soft concepts may be used to determine a similarity between input text data 21 and activation phrase 28. This includes comparing the two phrases not only with regard to single common terms, but with regard to characteristic sequences of terms. The corresponding methods are also known as concept dependent / specific language models.

If "soft concepts" are used, a word sequence frequency is determined on the basis of a training space. In the present context, the training space would be the valid activation phrases of all links in the current document. Each of the links would be regarded as a semantic concept. For each concept, a language model is trained on the available activation phrases. Also, a background model is determined, e.g. using generic text in the corresponding language, as a competition to the concept specific models. The models may be smoothed to achieve good generalization.

When the input text data 21 is then matched against the models, scores are awarded which indicate an agreement with each of the language models. A high score for a specific model indicates a close match for the corresponding link. If the generic language model "wins", no match is found.

The link with the "winning" language model is activated.

The soft concepts method is mentioned in: Souvignier, B., Kellner, A., Rueber, B., Schramm, H., and Seide, F. "The Thoughtful Elephant: Strategies for Spoken Dialog Systems", IEEE-SPAU, 2000, Vol 8, No. 1, p. 51-62. Further details on this method are given in Kellner, A., Portele, T., ""SPICE -- A Multimodal Conversational User Interface to an Electronic Program Guide", ICSA-Tutorial and Research Workshop on Multi-Modal Dialogue in Mobile Environments, 2002, Kloster Irsee, Germany.

## Claims

1. Audio dialogue system, comprising
- an audio input unit (12) for inputting an audio input signal,
- speech recognition means (20) associated with said audio input unit (12) for converting said audio input signal into a text input data (21),
- an audio output unit (12) for outputting an audio output signal, and speech synthesis means (26) associated with an output unit (12) for converting text output data (24) into said audio output signal,
- browsing means (22) for processing content data (D1), said content data (D1) comprising text content and at least one reference (Ln1, Ln2), said reference comprising a reference aim and activation information, said activation information comprising one or more activation phrases (28),
- said browsing means (22) being configured to control said speech synthesis means (26) to output said text content,
- said browsing means being further configured to compare said input text data (21) to said activation phrase (28), and in case of a match, for accessing content data (D2) corresponding to said reference aim,
- where in case that said text input data (21) is not identical to said activation phrase (28), said browsing means (22) find a match, if said input text data (21) has a meaning similar to said activation phrase (28).

2. System according to claim 1, said system further comprising
- dictionary means (30) for storing, for a plurality of search words (32a), connected words (32b, 32c, 32d) with a meaning connected to the meaning of said search words (32a),
- where said browsing means (22) are configured to retrieve connected words (32b, 32c, 32d) for words comprised in said input text data (21) and/or for words comprised in said activation phrase (28),
- and use said connected words (32b, 32c, 32d) for said comparison.

3. System according to claim 2, where
- said dictionary means (30) comprise for at least some of said search words (32a),
- connected words (32b, 32c, 32d) which fall into one or more of the categories out of the group consisting of: synonyms, hyponyms, hypernyms, holonyms, meronyms.

4. System according to one of the above claims, where
- said browsing means (22) are configured to establish a co-occurrence matrix giving for a plurality of terms and for a plurality of activation phrases the number of occurrences of said terms in said phrases,
- perform a singular value decomposition of said co-occurrence matrix to calculate a semantic space,
- and determine a similarity by representing said input text data (21) and said activation phrase (28) as vectors in said semantic space, and calculating a measure for the angle between these vectors.

5. System according to one of the above claims, where
- said browsing means (22) are configured to determine a word frequency for a plurality of words in all activation phrases of all links in said content data,
- and determine a similarity by finding common words in said input text data (21) and said activation phrase (28).

6. System according to one of the above claims, where
- said browsing means (22) are configured to determine a word sequence frequency for a plurality of word sequences of all activation phrases (28) of all of said links in said content data,
- and determine a similarity by processing word sequences of said input text data (21).

7. System according to one of the above claims, where
- for each of said links a language model is trained, said language model comprising word sequence frequencies,
- and said input text data (21) is compared to each of said language models by determining a score indicating an agreement of said input text data (21) with said model,
- and said similar meaning is determined according to said score.

8. Voice browsing method, including the steps of
- processing content data (D1), said content data (D1) comprising text content and at least one reference (LN1), said reference comprising a reference aim and activation information, said activation information comprising one or more activation phrases (28),
- converting said text content to an audio output signal using speech synthesis, and outputting said audio output signal,
- acquiring an audio input signal, and using speech recognition to convert said audio input signal to text input data (21),
- comparing said text input data (21) to said activation phrase (28) and in case that said text input data is not identical to said activation phrase (28), indicating a match if said input text data (21) has a meaning similar to said activation phrase (28), and in case of a match accessing content data (D2) corresponding to said reference aim.

## Patentansprüche

1. Audio-Dialogsystem, das Folgendes umfasst:
- eine Audioeingangseinheit (12) zum Eingeben eines Audioeingangssignals,
- Spracherkennungsmittel (20), die mit der genannten Audioeingangseinheit (12) assoziiert sind, zum Umwandeln des genannten Audioeingangssignals in Texteingangsdaten (21),
- eine Audioausgangseinheit (12) zum Ausliefern eines Audioausgangssignals, und Sprachsynthesemittel (26), die mit der Ausgangseinheit (12) assoziiert ist, zum Umwandeln von Textausgangsdaten (24) in das genannte Audioausgangssignal,
- Browsingmittel (22) zum verarbeiten von Inhaltsdaten (D1), wobei die genannten Inhaltsdaten (D1) Textinhalt und wenigstens einen Bezugswert (Ln1, Ln2) aufweist, wobei der genannte Bezugswert eine Bezugsziel- und Aktivierungsinformation aufweist, wobei die genannte Aktivierungsinformation eine oder mehrere Aktivierungsphrasen (28) umfasst,
- wobei die genannten Browsingmittel (22) derart konfiguriert sind, dass sie die genannten Sprachsynthesemittel (26) derart steuern, dass sie den genannten Textinhalt ausliefern,
- wobei die genannten Browsingmittel weiterhin derart konfiguriert sind, dass sie die genannten Eingangstextdaten (21) mit der genannten Aktivierungsphrase (28) vergleichen, und im Falle einer Übereinstimmung zum Zugreifen auf Inhaltsdaten (D2) entsprechend dem genannten Bezugsziel,
- wobei im Falle die genannten Textdaten (21) nicht der genannten Aktivierungsphrase (28) nicht entspricht, finden die genannten Browsingmittel (22) eine Übereinstimmung, wenn die genannten Eingangstextdaten (21) eine Bedeutung haben, die mit der genannten Aktivierungsphrase (28) übereinstimmt.

2. System nach Anspruch 1, wobei das genannte System weiterhin die nachfolgenden Elemente umfasst:
- Verzeichnismittel (30) zum Speichern einer Anzahl Suchwörter (32), verbundener Wörter (32b, 32c, 32d) mit einer Bedeutung, die mit der Bedeutung der genannten Suchwörter (32a) verbunden ist,
- wobei die genannten Browsingmittel (22) derart konfiguriert sind, dass sie verbundene Wörter (32b, 32c,32d) für Wörter in den genannten Eingangstextdaten (21) und/oder für Wörter in der genannten Aktivierungsphrase (28) erfassen,
- und die genannten verbundenen Wörter (32b, 32c, 32d) für den genannten Vergleich verwenden.

3. System nach Anspruch 2, wobei:
- die genannten Verzeichnismittel (30) wenigstens einige der genannten Suchwörter (32a) enthalten,
- verbundene Wörter (32b, 32c, 32d), die in einer oder mehreren Kategorien außerhalb der Gruppe liegen, die aus Synonymen, Hyponymen, Hypemymen, Holonymen, Meronumen besteht.

4. System nach einem der vorstehenden Ansprüche, wobei:
- die genannten Browsingmittel (22) derart konfiguriert sind, dass eine gleichzeitig auftretende Matrix gebildet wird, die für eine Anzahl Terme und für eine Anzahl Aktivierungsphrasen die Anzahl Auftritte der genannten Terme in den genannten Phrasen gibt,
- eine einzige Wertzerlegung der genannten gleichzeitig auftretenden Matrix durchgeführt wird, und zwar zum Berechnen eines semantischen Raumes, und
- eine Ähnlichkeit ermittelt wird durch Darstellung der genannten Eingangsdaten (2) und der genannten Aktivierungsphrase (28) als Vektoren in dem genannten semantischen Raum, und durch Berechnung eines Maßes für den Winkel zwischen diesen Vektoren.

5. System nach einem der vorstehenden Ansprüche, wobei
- die genannten Browsingmittel (22) derart konfiguriert sind, dass sie eine Wortfrequenz für eine Anzahl Wörter in allen Aktivierungsphrasen aller Kopplungen in den genannten Inhaltsdaten ermitteln,
- eine Ähnlichkeit ermittelt wird, und zwar **dadurch**, dass gemeinsame Wörter in den genannten Eingangstextdaten (21) und in der genannten Aktivierungsphrase (28) gefunden werden.

6. System nach einem der vorstehenden Ansprüche, wobei
- die genannten Browsingmittel (22) derart konfiguriert sind, dass die eine Wortfolgefrequenz für eine Anzahl Wortfolgen aller Aktivierungsphrasen (28) aller genannten Kopplungen in den genannten Inhaltsdaten ermitteln,
- eine Ähnlichkeit ermittelt wird, und zwar durch Verarbeitung von Wortsequenzen der genannten Eingangstextdaten (21).

7. System nach einem der vorstehenden Ansprüche, wobei
- für jede der genannten Kopplungen ein Sprachmodell trainiert wird, wobei das genannte Sprachmodell Wortfolgefrequenzen aufweist,
- die genannten Eingangstextdaten (21) mit jedem der genannten Sprachmodelle verglichen werden, und zwar durch Ermittlung einer Auswertung, die eine Übereinstimmung der genannten Eingangstextdaten (21) mit dem genannten Modell angibt, und
- die genannte ähnliche Bedeutung entsprechend der genannten Bewertung ermittelt wird.

8. Sprachbrowsingverfahren, das die nachfolgenden Verfahrensschritte umfasst:
- Verarbeitung von Inhaltsdaten (D1), wobei die genannten Inhaltsdaten (D1) Textinhalt und wenigstens einen Bezugswert (LN1) enthalten, wobei der genannte Bezugswert Bezugsziel- und Aktivierungsinformation aufweist, wobei die genannte Aktivierungsinformation eine oder mehrere Aktivierungsphrasen (28) aufweist,
- Umwandlung des genannten Textinhalts in ein Audioausgangssignal unter Anwendung von Sprachsynthese, und Auslieferung des genannten Audioausgangssignals,
- Erfassung eines Audioeingangssignals, und Anwendung von Spracherkennung zum Umwandeln des genannten Audioeingangssignals in Texteingangsdaten (21),
- Vergleich der genannten Texteingangsdaten (21) mit der genannten Aktivierungsphrase (28) und wobei im Falle, dass die genannten Texteingangsdaten nicht mit der genannten Aktivierungsphrase (28) übereinstimmen, angegeben wird, dass es eine Übereinstimmung gibt, wenn die genannten Eingangstextdaten (21) eine Bedeutung haben, die mit der genannten Aktivierungsphrase (28) übereinstimmt, und im Falle einer Übereinstimmung, Zugriff auf Inhaltsdaten (D2) entsprechend dem genannten Bezugsziel.

## Revendications

1. Système de dialogue audio, comprenant
- une unité d'entrée audio (12) pour introduire un signal d'entrée audio,
- des moyens de reconnaissance vocale (20) associés à ladite unité d'entrée audio (12) pour convertir ledit signal d'entrée audio en données d'entrée textuelles (21),
- une unité de sortie audio (12) pour sortir un signal de sortie audio, et des moyens de synthèse vocale (26) associés à une unité de sortie (12) pour convertir les données de sortie textuelles (24) en ledit signal de sortie audio,
- des moyens de navigation (22) pour traiter des données de contenu (D1), lesdites données de contenu (D1) comprenant du contenu textuel et au moins une référence (Ln1, Ln2), ladite référence comprenant une cible de référence et des informations d'activation, lesdites informations d'activation comprenant une ou plusieurs expressions d'activation (28),
- lesdits moyens de navigation (22) étant configurés pour commander lesdits moyens de synthèse vocale (26) pour présenter ledit contenu textuel,
- lesdits moyens de navigation étant de plus configurés pour comparer lesdites données textuelles d'entrée (21) à ladite expression d'activation (28), et en cas de correspondance, pour accéder aux données de contenu (D2) correspondant à ladite cible de référence,
- dans lequel, dans le cas où lesdites données d'entrée textuelles (21) ne sont pas identiques à ladite expression d'activation (28), lesdits moyens de navigation (22) trouvent une correspondance, si lesdites données textuelles d'entrée (21) ont une signification similaire à ladite expression d'activation (28).

2. Système selon la revendication 1, ledit système comprenant de plus
- des moyens sous la forme d'un dictionnaire (30) pour stocker, pour une pluralité de mots de recherche (32a), des mots connectés (32b, 32c, 32d) avec une signification connectée à la signification desdits mots de recherche (32a),
- dans lequel lesdits mots de navigation (22) sont configurés pour récupérer les mots connectés (32b, 32c, 32d) pour dès mots compris dans lesdites données textuelles d'entrée (21) et/ou pour des mots compris dans ladite expression d'activation (28),
- et utiliser lesdits mots connectés (32b, 32c, 32d) pour ladite comparaison.

3. Système selon la revendication 2, dans lequel
- lesdits moyens sous forme d'un dictionnaire (30) comprennent au moins certains desdits mots de recherche (32a),
- des mots connectés (32b, 32c, 32d) tombent dans une ou plusieurs des catégories parmi le groupe consistant en : des synonymes, des hyponymes, des hyperonymes, des holonymes, des méronymes.

4. Système selon l'une quelconque des revendications précédentes, dans lequel
- lesdits moyens de navigation (22) sont configurés pour établir une matrice de co-occurrence donnant pour une pluralité de termes et pour une pluralité d'expressions d'activation le nombre d'occurrences desdits termes dans lesdites expressions,
- réaliser une décomposition en valeur singulière de ladite matrice de co-occurrence pour calculer un espace sémantique,
- et déterminer une similarité en représentant lesdites donnés textuelles d'entrée (21) et ladite phrase d'activation (28) comme des vecteurs dans ledit espace sémantique, et calculent une mesure de l'angle entre ces vecteurs.

5. Système selon l'une quelconque des revendications précédentes, dans lequel
- lesdits moyens de navigation (22) sont configurés pour déterminer une fréquence de mot pour une pluralité de mots dans toutes les expressions d'activation de tous les liens dans lesdites données de contenu,
- et déterminer une similarité en trouvant des mots communs entre lesdites données textuelles d'entrée (21) et ladite expression d'activation (28).

6. Système selon l'une quelconque des revendications précédentes, dans lequel
- lesdits moyens de navigation (22) sont configurés pour déterminer une fréquence de séquence de mot pour une pluralité de séquences de mots de toutes les expressions d'activation (28) de tous lesdits liens dans lesdites données de contenu,
- et déterminer une similarité en traitant des séquences de mots desdites données textuelles d'entrée (21).

7. Système selon l'une quelconque des revendications précédentes, dans lequel
- pour chacun desdits liens, un modèle de langage subit un apprentissage, ledit modèle de langage comprenant des fréquences de séquences de mots,
- lesdites données textuelles d'entrée (21) sont comparées à chacun desdits modèles de langage pour déterminer un score indiquant une correspondance desdites données textuelles d'entrée (21) avec ledit modèle,
- ladite signification similaire est déterminée selon ledit score.

8. Procédé de navigation vocale, incluant les étapes de
- traitement des données de contenu (D1), lesdites données de contenu (D1) comprenant du contenu textuel et au moins une référence (LN1), ladite référence comprenant une cible de référence et des informations d'activation, lesdites informations d'activation comprenant une ou plusieurs expressions d'activation (28),
- conversion dudit contenu textuel en un signal de sortie audio en utilisant une synthèse vocale, et présentation dudit signal de sortie audio,
- acquisition d'un signal d'entrée audio, et utilisation d'une reconnaissance vocale pour convertir ledit signal d'entrée audio en données d'entrée textuelles,
- comparaison desdites données d'entrée textuelles à ladite expression d'activation (28), et en cas où lesdites données d'entrée textuelles ne sont pas identiques à ladite expression d'activation (28), indication d'une correspondance si lesdites données textuelles d'entrée (21) ont une signification similaire à ladite expression d'activation (28), et en cas de correspondance, accès aux données de contenu (D2) correspondant à ladite cible de référence.
